# EUROPÄISCHE PATENTSCHRIFT

(11) **EP 2 341 367 B1**
(45) Veröffentlichungstag und Bekanntmachung des Hinweises auf die Patenterteilung: **15.02.2017**
(21) Anmeldenummer: 10194222.5
(22) Anmeldetag: 08.12.2010
(51) Int. Cl.: G01S 13/86, G01S 13/91, G01S 17/02, G08G 1/017, G08G 1/04, G08G 1/054, G01S 13/42, G01S 13/58

(54) **Verfahren und Anordnung zur Erfassung von Verkehrsverstößen in einem Ampelbereich**
Method and assembly for detecting traffic violations in an area with traffic lights
Procédé et agencement de détection des infractions au code de la route dans une zone de feux de signalisation

(30) Priorität: 22.12.2009 DE 102009060499
(43) Veröffentlichungstag der Anmeldung: 06.07.2011
(73) Patentinhaber: JENOPTIK Robot GmbH, 40789 Monheim am Rhein (DE)
(72) Erfinder: Epp, Viktor, 53842 Troisdorf (DE); Pessara, Markus, 51061 Köln (DE)
(74) Vertreter: Schaller, Renate

(56) Entgegenhaltungen:
- EP-A1- 2 048 515
- EP-A1- 2 068 291
- EP-B1- 1 454 164
- WO-A1-2005/122104
- US-A1- 2004 222 904

## Beschreibung

Die Erfindung betrifft ein Verfahren und eine Anordnung zur Überwachung eines Verkehrsraumes zwecks Erfassung von Verkehrsverstößen in einem Ampelbereich, wie sie gattungsgemäß aus der Europäischen Patentanmeldung EP 2 048 515 A1 bekannt sind. Ein derartiges Verfahren und eine derartige Anordnung können sowohl zur Feststellung eines Rotlichtverstoßes, eines Geschwindigkeitsverstoßes als auch eines kombinierten Rotlicht - Geschwindigkeitsverstoßes eingesetzt werden.

Generell unterscheiden sich die bekannten Verfahren und Anordnungen zur Überwachung von Verkehrsräumen durch die Verwendung unterschiedlicher Arten von Sensoren, die entweder in den Fahrbahnbelag eingebettet oder oberhalb des Fahrbahnbelages angeordnet werden. Die in den Fahrbahnbelag eingebetteten Sensoren erfordern einen hohen Installationsaufwand und müssen entsprechend dem Verschleiß des Fahrbahnbelages von Zeit zu Zeit ausgetauscht werden. Sie sind außerdem nur für stationäre Anordnungen geeignet. Der damit überwachte Verkehrsraum wird durch die Anordnung der eingebetteten Sensoren begrenzt.

Anstatt in jeden einzelnen Fahrstreifen der Fahrbahn an einem vorbestimmten Ort einen Sensor einzubetten, wird gemäß der EP 2 048 515 A1 eine Radarstrahlung im Wesentlichen horizontal zur Fahrbahn und längs zum Fahrbahnrand über alle Fahrstreifen der Fahrbahn gerichtet. Dazu wird ein Radargerät, zum Senden und Empfangen von Radarstrahlung so zur Fahrbahn positioniert, dass es die eine Radarkeule bildende Radarstrahlung mit einem großen Öffnungswinkel, z. B. einem Öffnungswinkel β von 20 bis 40°, unter einem Aufstellwinkel α der Radarstrahlungsachse (Symmetrielinie der Radarkeule) zum Fahrbahnrand von kleiner 45° auf eine Fahrbahn mit mehreren Fahrstreifen aussendet. Die Fahrzeuge kommen beim Durchqueren der Radarkeule auf das Radargerät zu.
Der überwachte Verkehrsraum wird durch die Lage der Radarkeule bestimmt.

An sich innerhalb der Radarkeule befindenden Objekten wird die Radarstrahlung reflektiert und aus den Reflexionssignalen bzw. den abgeleiteten Doppler-Signalen werden in bekannter Weise für die jeweiligen Auftreffpunkte am Objekt Wertetripel abgeleitet, die jeweils aus einem Entfernungs- und einem Winkelwert, die gemeinsam die Position des Auftreffpunktes innerhalb der Radarkeule definieren, sowie einem Geschwindigkeitswert bestehen.

Es ist dem Fachmann klar, dass es sich bei dem genannten Auftreffpunkt nicht um eine auf einen Punkt reduzierte Fläche handelt, auf die die Radarstrahlung auftrifft, sondern korrekterweise um eine ausgedehnte Fläche an einem Fahrzeug, welche im Erfassungsbereich des Radargerätes liegt und die Radarstrahlung zum Radargerät zurück reflektiert.
Im Interesse einer einfachen Darstellung der Erfindung, die nicht die Ableitung der Entfernung, des Winkels oder der Geschwindigkeit hat, soll vereinfacht davon ausgegangen werden, dass ein die Radarkeule passierendes Fahrzeug zu jedem Zeitpunkt als ein Auftreffpunkt detektiert wird.

Durch den großen Öffnungswinkel β der Radarkeule kann ein großer Abschnitt einer Fahrbahn und damit ein großer Verkehrsraum überwacht werden, weshalb für jedes Fahrzeug innerhalb der Radarkeule wiederholt Messvorgänge durchgeführt werden können. Die erhaltenen Wertetripel, die jeweils durch einen Auftreffpunkt bewirkt werden, werden zu einem Track zusammengefasst und kontinuierlich auf Plausibilität geprüft (Tracking), indem die Messwerte mit errechneten Sollwerten verglichen werden. Die Sollwerte ergeben sich aus der Annahme, dass ein Fahrzeug nur in begrenztem Maße Richtungsänderungen vornimmt und auch nur in bestimmten Grenzen beschleunigt bzw. verzögert.
Indem die Änderung der Position und die Geschwindigkeit des Auftreffpunktes ermittelt werden, werden auch bei dichtem Verkehr nur die Wertetripel einem Track zugeordnet, die von einem Auftreffpunkt stammen und die Geschwindigkeitswerte werden verifiziert.
Aus den Messwerten eines Tracks kann demnach eine Geschwindigkeit einem Fahrzeug über die Identifikation der von dem Fahrzeug innerhalb der Radarkeule zurückgelegten Fahrspur zugeordnet werden.
Diese Fahrspur kann vollständig innerhalb eines Fahrstreifens liegen, zwischen zwei Fahrstreifen wechseln oder auch gleichzeitig über zwei benachbarte Fahrstreifen verlaufen.
Darüber hinaus kann prognostiziert werden, ob das Fahrzeug bei Umschalten auf die Rotphase in den Ampelbereich, der durch die Haltelinien begrenzt ist, einfahren wird. Vorteilhaft kann dadurch eine Kamera zur fotographischen Aufnahme des Fahrzeuges auch bereits vor dem eigentlichen Verkehrsverstoß ausgelöst werden.
Zu guter Letzt kann neben dem sogenannten Rotlichtverstoß, d. h. einem Einfahren bzw. Befahren des Ampelbereiches während der Rotlichtphase, davon unabhängig, ein Geschwindigkeitsverstoß festgestellt werden.
Im Falle, dass aus den Messwerten für einen Auftreffpunkt und damit für ein und dasselbe Fahrzeug ein Rotlichtverstoß festgestellt oder prognostiziert wird und/oder ein Geschwindigkeitsverstoß festgestellt wird, kann eine Kamera aktiviert werden, um den Verkehrsverstoß fotographisch zu erfassen.
Es wird in der vorgenannten EP 2 048 515 A1 auch vorgeschlagen, die durch das Radargerät gemessenen Entfernungen durch Messungen mit einem Laserentfernungsmesser zu verifizieren, was den Vorteil hat, dass der mit dem Radargerät erfasste Entfernungswert durch einen zweiten Beweis mit einem von dem Radargerät unabhängigen Verfahren bestätigt wird.

Auch wenn sich solche Verfahren in der Praxis bewährt haben, können sie nicht alle Verkehrssituationen, wie sie in Megastädten oder in megaurbanen Räumen vorkommen, wie z. B. Mumbai, zufriedenstellend überwachen. Die Ursache liegt zum einen in dem enorm hohen Verkehrsaufkommen während der Stoßzeiten in oder aus den Ballungsräumen als auch dem gegenüber europäischen Verhältnissen undisziplinierten Fahrverhalten. Der zunehmende Mobilitätsbedarf in solchen Ballungsräumen führte im vergangenen Jahrzehnt zu einer immer weiter steigenden Anzahl von Unfällen, die viele Menschenleben kosten. Da Fahrstreifenmarkierungen entweder nicht vorhanden sind oder die Fahrer diese nicht beachten, kommt es häufig vor, dass auf den oft fünfspurigen Fahrbahnen bis zu zehn Fahrzeuge nebeneinander fahren. So können riesige Fahrzeugströme während einer Rotphase Kreuzungen passieren. Leider ist es zur Gewohnheit geworden, dass die Mehrheit der Fahrer die Einhaltung der Rotphase missachtet. Da eine Fahrstreifenzuordnung nicht möglich ist, kommen in den Fahrbahnbelag eingebettete Sensoren nicht in Frage. Berührungslose Sensoren haben den Vorteil, dass sie fahrstreifenunabhängig Fahrzeuge erfassen können, aber auch den Nachteil, dass Fahrzeuge, die durch andere abgeschattet werden, nicht oder nur teilweise erfasst werden können. Eine Videoaufzeichnung während der Rotphase, in der anschließend manuell die verletzenden Fahrzeuge festgestellt werden, ist aufgrund der vielen tausend Verkehrsverstöße pro Tag nicht zu bewerkstelligen und dient somit nicht einer erfolgreichen Reduzierung von Unfällen. Verschärft wird diese Situation dadurch, dass die Fahrer mit der Zeit die Erfahrung sammeln, dass sie maximal zu 50% mit den bekannten Verfahren detektiert werden können und auch noch die Detektionsrate sinkt, je undisziplinierter sie fahren.
Aus der EP 1 454 164 B1 ist die Verwendung von Laserscannern, die oberhalb der Fahrbahn montiert werden und die Fahrbahn in einer zur Fahrbahn senkrechten Messebene abscannen, bekannt. Indem ein Fahrzeug wenigstens zwei Messebenen zeitlich hintereinander durchfährt, kann aus den damit erhaltenen Messwerten die Geschwindigkeit und die Geometrie des Fahrzeuges erfasst werden.
Die US 2004/0222904 A1 offenbart eine Vorrichtung und ein Verfahren zur Feststellung, Aufzeichnung und Beweisführung einer Verkehrsrechtsverletzung. Mit Kameras unterschiedlicher Öffnungswinkel werden Verkehrsszenen beobachtet, aufgenommen und abgespeichert. Über Bildverarbeitung werden die Bilder ermittelt, die während der Rotlichtphase erstellt wurden und Verletzerfahrzeug abbilden. Geschwindigkeitsverletzungen werden durch Sensoren wie Dopplerradar oder Lasersysteme festgestellt. Es gibt keinen Hinweis, dass ein Dopplerradar und ein Lasersystem gleichzeitig verwendet werden.

Der Erfindung liegt die Aufgabe zu Grunde, ein verbessertes Verfahren mit berührungslosen Sensoren zu schaffen, mit dem die Detektionsrate von Rotlichtverstößen bei sehr hohem Verkehrsaufkommen und dichtem Verkehr verbessert wird.
Der Erfindung liegt auch die Aufgabe zugrunde, eine dafür geeignete Anordnung zu finden.

Diese Aufgabe wird mit einem Verfahren gemäß Anspruch 1 gelöst.
Vorteilhafte Ausführungen sind in den Unteransprüchen beschrieben.

Mit dem Verfahren sollen Verkehrsverstöße auf einer stark befahrenen Fahrbahn mit mehreren Fahrstreifen innerhalb eines Ampelbereiches, der durch Haltelinien, die jeweils einem Fahrstreifen zugeordnet sind, begrenzt ist, erfasst werden. Um die Verkehrsführung im Ampelbereich zu regeln, ist wenigstens eine Verkehrsampel vorhanden, die auf die einzelnen Haltelinien bezogene Schaltphasen anzeigt. Eine übliche Verkehrsampel kann nacheinander als Schaltphasen eine Grünlichtphase, eine Gelbphase und eine Rotlichtphase anzeigen, womit allein mit einer Ampel für alle Haltelinien und damit Fahrstreifen nur eine Schaltphase angezeigt werden kann. Ausnahmsweise kann mit einem so genannten Rechtsabbiegerpfeil ein zweite Grünlichtphase für Rechtsabbieger angezeigt werden, während für die anderen Fahrzeuge auf den benachbarten Fahrstreifen die Rotlichtphase angezeigt ist. Grundsätzlich könnten für eine so gewünschte Verkehrsführung auch zwei Ampeln verwendet werden, die allerdings für die Fahrzeugführer zweifelsfrei den hierfür bedachten Fahrstreifen zugeordnet werden müssen.
Um einen solchen Ampelbereich auf Verkehrsverstöße zu überwachen, soll gemäß einem erfindungsgemäßen Verfahren gleich einem aus dem Stand der Technik bekannten Verfahren eine von einem am Fahrbahnrand aufgestellten Radargerät ausgehende, eine Radarkeule bildende Radarstrahlung mit einem Öffnungswinkel größer 20°, unter einem Aufstellwinkel der Radarstrahlungsachse zum Fahrbahnrand von kleiner 45° horizontal über die Fahrbahn gerichtet werden.
Je größer der Öffnungswinkel gewählt wird, desto größer wird die durch die Radarstrahlung gebildete Radarkeule und somit der von der Radarkeule abgedeckte, überwachte Verkehrsraum. Je größer der überwachte Verkehrsraum ist, desto größer ist die Wahrscheinlichkeit, dass ein die Radarkeule durchfahrendes Fahrzeug zumindest nicht über die gesamte Durchfahrzeit von einem anderen Fahrzeug abgeschattet wird und von diesem Fahrzeug genügend Messwerte (nachfolgend erste Messwerte genannt) erhalten werden.
Die ersten Messwerte werden fahrzeugbezogen aus der, an den die Radarkeule durchfahrenen Fahrzeugen reflektierten Radarstrahlung abgeleitet.

Unter Einbeziehung eines Verstoßkriteriums werden aus den ersten Messwerten Daten gebildet, die das betreffende Fahrzeug in einer Gruppe von Fahrzeugen innerhalb einer Abbildung über seine Position identifizieren und den Verkehrsverstoß gegebenenfalls beweisen.
Aus der reflektierten Radarstrahlung können als Messwerte ein Entfernungswert und ein Winkelwert als Positionswert und ein Geschwindigkeitswert für einen Auftreffpunkt abgeleitet werden. Daraus lässt sich über die Änderung der Positionswerte die Fahrspur ermitteln, die das Fahrzeug zurücklegt, und prognostizieren bzw. bestimmen, wo das Fahrzeug die Haltelinien überfährt. So kann das Fahrzeug einer Haltelinie und damit einem Fahrstreifen zugeordnet werden oder auch zwei benachbarten Fahrstreifen, wenn es zwischen diesen fährt. Der Vergleich dieser Messwerte, denen jeweils ein Messzeitpunkt zugeordnet werden kann, mit dem Zeitpunkt des Einschaltens der Rotlichtphase als Verstoßkriterium ermöglicht festzustellen, ob der Rotlichtverstoß stattfindet.
Vorteilhaft können die ermittelten Werte in Verbindung oder auch losgelöst von der Überwachung von Rotlichtverstößen für eine Überwachung von Geschwindigkeitsverstößen genutzt werden. Als Verstoßkriterium dient dann eine vorgegebene Höchstgeschwindigkeit, die auch fahrstreifenselektiv vorgegeben werden kann. Die Überwachung auf Geschwindigkeitsverstöße könnte vorteilhaft auf die Rotlichtphase begrenzt werden, wenn nur beide Verstöße in Kombination geahndet werden sollen, oder auch dauerhaft erfolgen, womit die gleiche Anordnung einen doppelten Zweck erfüllt.
Bei Vorliegen eines Verstoßes werden die fahrzeugbezogenen Daten gespeichert und es wird eine Kamera ausgelöst, um wenigstens eine Abbildung von dem betreffenden Fahrzeug herzustellen.
Das Auslösen der Kamera kann durch die Möglichkeit, den Verstoß noch vor der Haltelinie festzustellen bzw. zu prognostizieren, bereits erfolgen, bevor das Fahrzeug die Haltelinie überfahrt. Es kann beim Überfahren oder bei Erreichen eines späteren Fotopunktes erfolgen. Die Aufnahme kann nur in einer elektronisch gespeicherten Datei oder durch Ausdrucken eines Fotos erzeugt werden.

Es ist erfindungswesentlich, dass auch die Fahrzeuge erfasst werden, von denen nur unzureichend viele erste Messwerte oder keine ersten Messwerte erhalten werden, was insbesondere aufgrund von Abschattung der Fahrzeuge durch andere Fahrzeuge passiert, indem jede Haltelinie durch einen von einem Laserscanner kommenden Laserstrahl abgescannt wird, wenn die der Haltelinie jeweils zugeordnete Schaltphase eine Rotlichtphase ist.
Der Laserstrahl wird an Fahrzeugen reflektiert, welche die betreffende Haltelinie überfahren, und aus dem reflektierten Laserstrahl werden fahrzeugbezogen zweite Messwerte abgeleitet.
Diese zweiten Messwerte sind Entfernungswerte und Winkelwerte, die jeweils eine Position des Auftreffpunktes beschreiben. Somit kann ein angemessenes Fahrzeug ebenfalls einer Haltelinie oder zwei benachbarten Haltelinien zugeordnet werden, je nachdem welche es überfährt. Da der Laserstrahl nur über die Haltelinien gescannt wird, wenn für die betreffende Haltelinie die Rotlichtphase gilt, bedarf es keines Vergleiches mit einem Verstoßkriterium, sondern jedes angemessene Fahrzeug ist zwangläufig ein Verletzerfahrzeug. Selbstverständlich wäre es technisch auch möglich, den Laser ohne Unterbrechung unabhängig von der Schaltphase über die Haltelinien zu scannen, was allerdings zu einem unsinnigen Energieverbrauch führen würde. Dann müsste man die Erfassung der Messwerte dahingehend prüfen, ob sie innerhalb der Dauer der Rotlichtphase generiert wurden, um einen Verstoß feststellen zu können.

Nach dem Erhalt der zweiten Messwerte wird von diesen ausgehend nach korrelierenden ersten Messwerten gesucht, die von demselben Fahrzeug verursacht wurden. Dies ist z. B. möglich, indem nach ersten Messwerten gesucht wird, die eine Fahrspur beschreiben, denen die zweiten Messwerte, die nur Positionswerte darstellen, zugeordnet werden können.
Wenn keine korrelierenden ersten Messwerte gefunden werden, werden die zweiten Messwerte gespeichert, und es wird eine Kamera ausgelöst, um wenigstens eine Abbildung von dem betreffenden Fahrzeug zu erstellen und es werden aus den zweiten Messwerten Daten gebildet, die das betreffende Fahrzeug in einer Gruppe von Fahrzeugen innerhalb der Abbildung über seine Position identifizieren und den Verkehrsverstoß beweisen. Mit den zweiten Messwerten des Laserscanners, die nur Positionswerte, bestimmt durch Entfernungs- und Winkelwerte, umfassen, können nur Rotlichtverstöße, nicht aber auch Geschwindigkeitsverstöße festgestellt werden.
Erhält die Recheneinheit vom Radargerät genügend erste Messwerte von einem Fahrzeug, die einen Verkehrsverstoß sicher belegen oder prognostizieren, dann werden diese abgespeichert und es wird ein Signal abgegeben, welches eine Kamera auslöst.
Die zugehörigen zweiten Messwerte können gelöscht oder als zusätzlicher Beweis gespeichert werden. Zur Dokumentation eines Rotlichtverstoßes, durch Erstellung einer Aufnahme, wird immer dann ein Signal zum Auslösen einer Kamera erzeugt, wenn ein Verstoß als gesichert gilt oder die Prognose ergibt, dass das Fahrzeug die Haltelinie während einer vorgegebenen Schaltphase überfährt, oder wenn der Laserscanner eine Überfahrt während einer Rotphase detektiert und das Radargerät zum gleichen Zeitpunkt am gleichen Ort kein anderes Fahrzeug sieht.

Grundsätzlich kann der Laserstrahl mittels eines Einachs-Scanners oder eines Mehrachs-Scanners über die Haltelinien gescannt werden.
Vorteilhaft scannt derselbe Laserstrahl in einer Ebene senkrecht zur Fahrbahn alle Haltelinien ab, die in einer Flucht senkrecht zum Fahrbahnrand nebeneinander angeordnet sind, wenn ihnen ein gleiche Schaltphase zugeordnet ist.

Mit dem Einsatz von Einachs-Laserscannern muss jede Haltelinie, die zur benachbarten Haltelinie versetzt angeordnet ist, einem Einachs-Laserscanner zugeordnet werden.
Vorteilhaft kann ein Mehrachs-Laserscanner verwendet werden, der alle Haltelinien abscannen kann, auch wenn diese zueinander versetzt angeordnet sind.

Die Verwendung von mehreren Laserscannern hat allerdings auch den Vorteil, dass Verstöße haltelinienselektiv und damit fahrstreifenselektiv erfasst werden können, wodurch es möglich ist, Verkehrsverstöße auch dann zu erfassen, wenn den Haltelinien unterschiedliche Schaltphasen zugeordnet werden.
Vorteilhaft scannt dann jeweils ein Laserstrahl in einer Ebene senkrecht zur Fahrbahn jeweils eine Haltelinie ab. Dies ist vor allem auch dann sinnvoll, wenn die Haltelinien zueinander versetzt, senkrecht zum Fahrbahnrand nebeneinander angeordnet sind.

Eine erfindungsgemäße Anordnung ist zur Durchführung eines erfindungsgemäßen Verfahrens vorgesehen. Sie wird eingesetzt, um Verkehrsverstöße auf einer stark befahrenen Fahrbahn mit mehreren Fahrspuren innerhalb eines Ampelbereiches festzustellen. Der Ampelbereich ist durch Haltelinien begrenzt, die jeweils einem Fahrstreifen zugeordnet sind und es ist wenigstens eine Verkehrsampel vorhanden, die auf die einzelnen Haltelinien bezogene Schaltphasen anzeigt.
Als Verkehrsverstoß innerhalb eines Ampelbereiches kann ein Einfahren in den Ampelbereich während der Rotlichtphase oder ein Einfahren mit überhöhter Geschwindigkeit erfasst werden.
Die Anordnung umfasst ein Radargerät, eine Rechen- und Speichereinheit, eine Steuereinheit, wenigstens eine Kamera und wenigstens einen Laserscanner.

Das Radargerät ist am Fahrbahnrand mit einem Aufstellwinkel der Radarstrahlungsachse zum Fahrbahnrand von kleiner 45° so aufgestellt, und zwar so, dass es eine eine Radarkeule bildende Radarstrahlung mit einem Öffnungswinkel größer 20° horizontal über die Fahrbahn richten kann und die Radarstrahlung von Fahrzeugen reflektiert wird, die die Radarkeule durchfahren.

Die Rechen- und Speichereinheit ist mit dem Radargerät und der Verkehrsampel verbunden und ist so ausgelegt, dass sie aus vom Radargerät durch Reflexion an einem Fahrzeug erhaltenen ersten Messwerten Daten bilden kann, die das betreffende Fahrzeug in einer Gruppe von Fahrzeugen innerhalb einer Abbildung über seine Position identifizieren und einen Verkehrsverstoß beweisen kann.

Die Steuereinheit ist mit der Rechen- und Speichereinheit sowie wenigstens einer auf den Ampelbereich gerichteten Kamera verbunden, die von der Steuereinheit ein Signal erhalten und ausgelöst werden kann, um wenigstens eine Abbildung zu erstellen, wenn die Rechen- und Speichereinheit Daten gebildet hat, die einen Verkehrsverstoß beweisen.
Es ist erfindungswesentlich, dass die Anordnung wenigstens einen Laserscanner umfasst, der oberhalb der Fahrbahn so angeordnet ist, dass er die Haltelinien abscannen kann. Der Laserscanner steht mit der Verkehrsampel in Verbindung, wodurch er in Anhängigkeit vom Beginn der Rotlichtphase angesteuert werden kann und mit der Rechen- und Speichereinheit verbunden ist, welche so ausgelegt ist, dass sie aus von an einem Fahrzeug reflektierten Laserstrahl abgeleiteten Messwerten Daten bilden kann, die das betreffende Fahrzeug in einer Gruppe von Fahrzeugen innerhalb einer Abbildung über seine Position identifizieren und einen Verkehrsverstoß beweisen können.

Wenn die Haltelinien auf den Fahrstreifen in einer Flucht, senkrecht zum Fahrbahnrand nebeneinander verlaufen, umfasst die Anordnung vorteilhaft nur einen Laserscanner, der so oberhalb der Fahrbahn angeordnet ist, dass er die Haltelinien in einer zur Fahrbahn senkrechten Ebene abscannen kann.

Der Laserscanner umfasst einen Scanspiegel, wenn er als Einachs-Scanner in nur einer Richtung scannen kann und zwei Scanspiegel, wenn er als Zweiachs-Scanner eine Ebene in zwei Richtungen abscannen kann. Er ist vorteilhaft mittig über der Fahrbahn angeordnet, sodass der Scanspiegel ausgehend von einer mittigen Nulllage, in der der Laserstrahl senkrecht auf die Fahrbahn trifft, mit einem gleichen Auslenkwinkel im entgegengesetzten Richtungssinn ausgelenkt wird, um die Haltelinien aller Fahrstreifen abzuscannen.

Wenn die Haltelinien auf den Fahrstreifen zueinander versetzt angeordnet sind oder wenigstens eine Haltelinie versetzt zu den anderen, in einer Flucht senkrecht zum Fahrbahnrand nebeneinander angeordneten Haltelinien verläuft, muss entweder ein Zweiachs-Scanner verwendet werden oder es werden vorteilhaft mehrere Laserscanner so oberhalb der Fahrbahn angeordnet, dass jede Haltelinie in einer zur Fahrbahn senkrechten Ebene abgescannt werden kann. Die Verwendung mehrerer Laserscanner erlaubt auch, dass Rotlichtverstöße fahrstreifenselektiv erfasst werden können, weshalb die Haltelinien auch unterschiedlichen Schaltphasen zugeordnet sein können. Das heißt z. B. während für eine Haltelinie die Rotlichtphase geschalten ist, ist für andere die Grünlichtphase oder Gelblichtphase geschalten, womit eine fahrstreifenselektive Verkehrsführung durch den Ampelbereich möglich ist.
Es ist vorteilhaft, wenn auch die Verkehrsampel oberhalb der Fahrbahn angeordnet ist, womit der Laserscanner und die Verkehrsampel an einem gemeinsamen Träger befestigt sind. Der Laserscanner ist auf diese Weise nicht bereits aus großer Entfernung für die Fahrzeugführer wahrnehmbar, was zu einer ungewollten Vorwarnung führen würde.

Eine erfindungsgemäße Anordnung kann verwendet werden, um Rotlichtverstöße und/oder Geschwindigkeitsverstöße zu erfassen.

Die Erfindung soll nachfolgend anhand von Ausführungsbeispielen an Zeichnungen näher erläutert werden.

Hierzu zeigen:
- Fig. 1: eine Prinzipskizze für ein erstes Ausführungsbeispiel einer erfindungsgemäßen Anordnung,
- Fig. 2a und 2b: eine erste Ausführung der Anordnung eines Laserscanners zur Fahrbahn,
- Fig. 3: eine zweite Ausführung der Anordnung von Laserscannern zur Fahrbahn,
- Fig. 4a und 4b: eine dritte Ausführung der Anordnung eines Laserscanners zur Fahrbahn

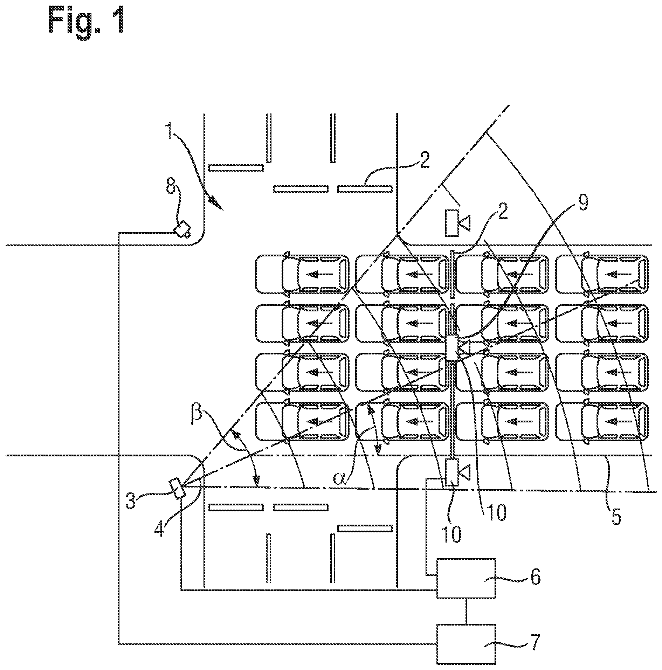

In Fig. 1 ist ein erstes Ausführungsbeispiel für eine erfindungsgemäße Anordnung dargestellt. Alle Ausführungsbeispiele für eine erfindungsgemäße Anordnung umfassen ein Radargerät 3, eine Rechen- und Speichereinheit 6, eine Steuereinheit 7 und wenigstens eine Kamera 8. Auch sind diese genannten gleichen Mittel in allen Ausführungsbeispielen gleich miteinander verbunden und die Aufstellung des Radargerätes 3 zur Fahrbahn gleich.

Die Ausführungsbeispiele unterscheiden sich lediglich in der Anzahl und Anordnung von Laserscannern 9 zur Fahrbahn, wobei die Anzahl und Anordnung der Laserscanner 9 davon abhängig gewählt wird, wie die Haltelinien 2 auf der Fahrbahn, die jeweils einem Fahrstreifen zugeordnet sind, zueinander angeordnet sind und ob alle Haltelinien 2 und damit Fahrstreifen einer gleichen Schaltphase oder unterschiedlichen Schaltphasen einer Verkehrsampel 10 zugeordnet sind.
Bei einem Radargerät 3, wie es für die erfindungsgemäße Anordnung und das erfindungsgemäße Verfahren verwendet wird, handelt es sich um ein Dauerradargerät. Bekanntermaßen wird mit einem Dauerradargerät eine in Amplitude und Frequenz konstante Dauerradarstrahlung ausgesendet. Bei der Reflexion an einem bewegten Objekt, sprich einem Fahrzeug, erfährt diese Radarstrahlung eine von der Geschwindigkeit des Fahrzeuges abhängige Frequenzverschiebung. Der in das Radargerät 3 zurückreflektierte Strahlungsanteil wird mit der ausgesendeten Radarstrahlung verglichen und es wird eine Frequenzdifferenz, die so genannte Dopplerfrequenz gebildet, die zu der Geschwindigkeit des Fahrzeuges proportional ist.
Mit der Ausstrahlung einer Radarstrahlung in zwei verschiedenen Frequenzen erhält man zwei frequenzverschobene Reflexionsstrahlungen, aus deren Phasendifferenz die Entfernung abgeleitet wird. Bei Radargeräten mit zwei Empfangsfeldern kann über den Laufzeitunterschied der Reflexionsstrahlung zusätzlich zur Entfernung auch der Winkel, unter dem das Fahrzeug zur Radarstrahlungsachse 4 angemessen wird, abgeleitet werden. Die Geschwindigkeit, die Entfernung und der Winkel werden somit über einen gemeinsamen Messvorgang ermittelt, wodurch eine eineindeutige Zuordnung der Messwerte zueinander gesichert ist.

Das Radargerät 3 wird so neben der Fahrbahn positioniert, dass die eine Radarkeule bildende Radarstrahlung mit einem großen Öffnungswinkel, z. B. einem Öffnungswinkel β von 20 bis 40°, unter einem Aufstellwinkel α der Radarstrahlungsachse 4 zum Fahrbahnrand 5 von kleiner 45° horizontal auf eine Fahrbahn mit mehreren Fahrstreifen ausgesendet wird. Die Fahrzeuge kommen beim Durchqueren der Radarkeule auf das Radargerät 3 zu gefahren.
Der überwachte Verkehrsraum ist durch die Randstrahlen der Radarkeule und die beidseitigen Fahrbahnränder begrenzt und liegt zumindest im Wesentlichen vor den Haltelinien 2.
Die Radarstrahlung trifft auf die die Radarkeule durchfahrenden Fahrzeuge auf und wird an diesen, vereinfacht dargestellt an einem Auftreffpunkt reflektiert. Ein Teil der reflektierten Radarstrahlung fällt zurück in das Radargerät 3, wo aus der reflektierten Radarstrahlung (Radarsignalen) erste Messwerte für die Auftreffpunkte abgeleitet werden können.
Um den einzelnen Auftreffpunkten jeweils einen Entfernungswert und einen Winkelwert zuordnen zu können, muss die genaue Lage der Haltelinien 2 zum Aufstellort des Radargerätes 3 und die Ausrichtung der Radarstrahlungsachse 4 ermittelt werden und der mit dem Radargerät 3 in Verbindung stehenden Rechen- und Speichereinheit 6 zur Verfügung gestellt werden.
Bei Haltelinien 2, die grundsätzlich senkrecht zum Fahrbahnrand 5 verlaufen, ist deren Lage bereits durch deren senkrechten Abstand zum Radargerät 3 definiert.
Um erfindungsgemäß zu prognostizieren, ob ein angemessenes Fahrzeug, dessen Durchfahrt einen Auftreffpunkt bewirkt, eine Haltelinie 2 auch tatsächlich überfährt, wird neben dessen Entfernung und dem Winkel zur Radarstrahlungsachse 4, die gemeinsam die Position des Auftreffpunktes in der Radarkeule beschreiben, auch dessen Geschwindigkeit aus den Radarsignalen abgeleitet und einem Auftreffpunkt zugeordnet.
Anhand des Weg-Zeit-Gesetzes wird anschließend aus der Position und der Geschwindigkeit für den Auftreffpunkt prognostiziert, ob das Fahrzeug noch vor der Haltelinie 2, die diesem Fahrstreifen zugeordnet ist, auf dem das Fahrzeug fährt, zum Halten kommt oder diese überfährt.
Gleichzeitig kann die ermittelte Geschwindigkeit mit einer dem Fahrstreifen zugeordneten Grenzgeschwindigkeit verglichen werden, um gegebenenfalls auch einen Geschwindigkeitsverstoß ahnden zu können.
Das Radargerät 3 ist an eine Verkehrsampel 10 einer Ampelanlage angeschlossen. Mit dem Start einer Rotlichtzeit (optional zusätzlich auch die Gelbzeit) wird die Anordnung und damit die Überwachung aktiviert, so dass ein die Radarkeule durchfahrendes Fahrzeug detektiert werden kann. Das Radargerät 3 kann auch unabhängig von den Schaltphasen der Verkehrsampel 10 dauerhaft aktiviert bleiben, womit Geschwindigkeitsverstöße permanent erfasst werden können. Mit dem Start der Rotlichtphase wird dann lediglich ein Signal generiert, welches der Rechen- und Speichereinheit 6 zugeführt wird und dann als Verstoßkriterium zur Verfügung steht.
Durch die Ermittlung der Position des Auftreffpunktes und damit des Fahrzeuges kann festgestellt werden, auf welchem Fahrstreifen sich das Fahrzeug einer Haltelinie 2 nähert. Somit kann fahrstreifenselektiv ein Verkehrsverstoß vorausgesagt werden, insbesondere wenn für die unterschiedlichen Fahrstreifen unterschiedliche Ampelphasen, z. B. für Rechtsabbieger, geschaltet werden.
Ein Verkehrsverstoß liegt vor, wenn die ermittelte Geschwindigkeit höher als eine für den jeweiligen Fahrstreifen festgelegte Grenzgeschwindigkeit ist und/oder wenn ein Fahrzeug während einer Rotlichtphase eine Haltelinie 2 überfährt.

Eine Übertretung der zulässigen Grenzgeschwindigkeit wird mittels des Dopplereffektes von der Radaranlage ermittelt und in einer fotografischen Aufzeichnung dokumentiert. Für die Identifikation des Fahrers ist dabei eine Frontfotografie notwendig. Dafür wird die fotografische Aufzeichnung bei Geschwindigkeitsverstößen im ankommenden Verkehr beim Eintritt eines Fahrzeuges in die Radarkeule ausgelöst und die relevanten Daten werden nach Abschluss der Messung nachträglich in die Aufzeichnung des Verkehrsverstoßes eingeblendet.
Ein Rotlichtverstoß wird anhand einer Aufzeichnung dokumentiert, die ausgelöst wird, wenn ein Fahrzeug sich außerhalb einer der für diesen Fahrstreifen zugeordneten Grünphase einer Haltelinie 2 nähert und die Fahrzeuggeschwindigkeit einen Rotlicht-Verstoß wahrscheinlich macht.
Für den Installationsort des Radargerätes 3 ist in Fahrtrichtung betrachtet sowohl die rechte Fahrbahnseite als auch die linke Fahrbahnseite geeignet. Der notwendige Installations-Bauraum ist in den meisten Fällen auf der rechten Fahrbahnseite vorhanden. Die linke Fahrbahnseite ist dann besonders günstig, den notwendigen Bauraum vorausgesetzt, wenn auf dem linken Fahrstreifen aufgrund weniger vorkommender großer Fahrzeuge die Gefahr von Abschattungen geringer ist.

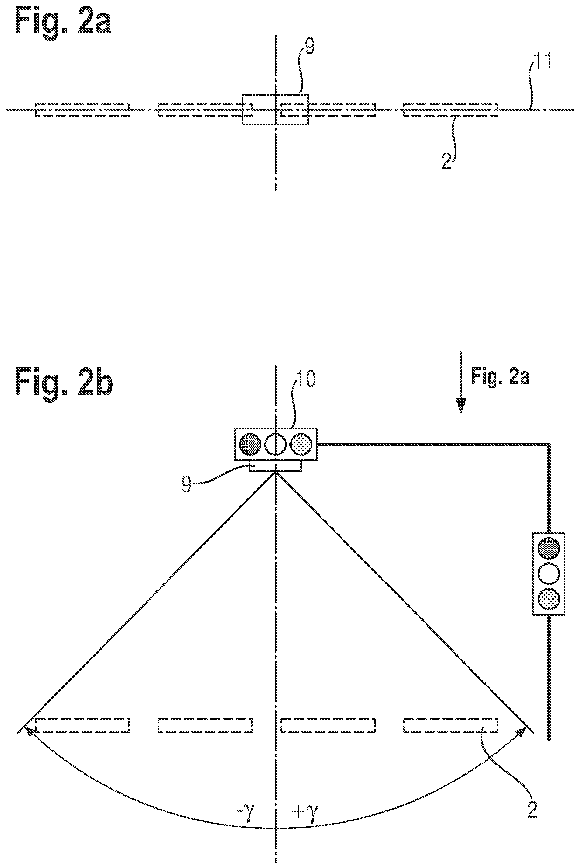

Die Zuordnung der Position eines Auftreffpunktes zu einer Haltelinie 2 ermöglicht nicht nur eine Prognose, ob die Haltelinie 2 überfahren wird, sondern ermöglicht auch das Auslösen einer Kamera 8, unabhängig von der Fahrzeuggeschwindigkeit, in Abhängigkeit von wählbaren Entfernungen des Fahrzeuges von der Haltelinie 2.
Durch den großen Öffnungswinkel β der Radarkeule kann ein großer Verkehrsraum überwacht werden und somit für jedes Fahrzeug innerhalb der Radarkeule wiederholt Messvorgänge durchgeführt werden. Die erhaltenen ersten Messwerte sind Wertetripel aus Geschwindigkeit, Entfernung und Winkel und werden zu einem Track zusammengefasst und kontinuierlich auf Plausibilität geprüft (Tracking), indem Istwerte mit Sollwerten verglichen werden. Die Sollwerte ergeben sich aus der Annahme, dass ein Fahrzeug nur in begrenztem Maße Richtungsänderungen vornimmt und auch nur in bestimmten Grenzen beschleunigt bzw. verzögert. Eine Aufzeichnungseinheit, die aus mindestens einer Kamera 8 besteht, kann je nach Fotopunkt im Gehäuse des Radargerätes 3 als auch in einem separaten abgesetzten Gehäuse angeordnet werden.
Erfindungsgemäß werden zusätzlich zur Überwachung des von der Radarkeule abgedeckten Verkehrsraumes, der die Haltelinien 2 einschließen kann, aber nicht muss, die Haltelinien 2 durch eine andere Maßnahme, nämlich durch ein Abscannen mittels Laserstrahl überwacht.
Die aus dem reflektierten Laserstrahl erhaltenen zweiten Messwerte sind Wertepaare aus Entfernung und Winkel. Über die Kenntnis der Relativlage des Radargerätes 3 zum Laserscanner 9 können die auf den Laserscanner 9 bezogenen Messwerte mit den auf das Radargerät 3 bezogenen Messwerten vergleichen werden, indem geprüft wird, ob die Messwerte des Laserscanners 9 einem Track zugeordnet werden können.
Ist dies nicht möglich, so werden die Messwerte des Laserscanners 9 verwendet, um einen Verkehrsverstoß zu beweisen, ansonsten werden die des Radargerätes 3 verwendet.
Um die Haltelinien 2 abzuscannen, ist gemäß einem ersten Ausführungsbeispiel, dargestellt in Fig. 1 sowie den Fig. 2a und Fig. 2b, ein Laserscanner 9 mittig so über der Fahrbahn angeordnet, dass er durch Auslenkung des Laserstrahles in einer senkrechten Ebene zur Fahrbahn alle Haltelinien 2 abscannt, die in einer Flucht senkrecht zum Fahrbahnrand 5 angeordnet sind. Die beschriebene Scanlinie 11 ist eine sich über die gesamte Fahrbahnbreite erstreckende Gerade. Die Auslenkwinkel +/γ, beidseitig der Flächennormale zur Nulllage des Scanspiegels sind dann gleich. Vorteilhaft ist der Laserscanner 9 gemeinsam mit einer Verkehrsampel 10 an einem gemeinsamen Träger befestigt.

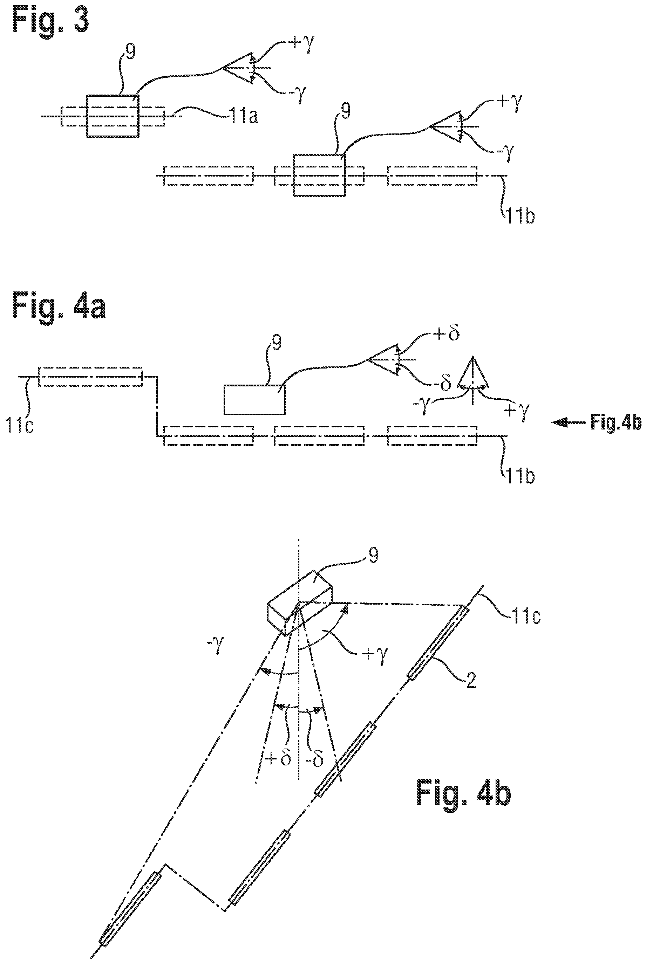

In Fig. 3 ist ein zweites Ausführungsbeispiel für eine erfindungsgemäße Anordnung, beschränkt auf die Darstellung der Anordnung von zwei Laserscannern 9 zu den Haltelinien 2, gezeigt.
Darüber hinaus entspricht die Anordnung gemäß dem zweiten Ausführungsbeispiel einer Anordnung gemäß dem ersten Ausführungsbeispiel.

Das zweite Ausführungsbeispiel ist vorgesehen für eine Verwendung, wenn nicht alle Haltelinien 2 in einer Flucht angeordnet sind.
In dem in Fig. 3 gezeigten Ausführungsbeispiel wird eine Haltelinie 2 in einer senkrechten Ebene und drei andere Haltelinien 2 in einer anderen senkrechten Ebene abgescannt, wobei zwei Scanlinien 11a, 11b beschrieben werden, die jeweils eine Gerade darstellen und gleich den Haltelinien 2 zueinander versetzt sind. Vorteilhaft können diese beiden Laserscanner 9 mit unterschiedlichen Ampeln verbunden sein.

In Fig. 4a und 4b ist ein drittes Ausführungsbeispiel für eine erfindungsgemäße Anordnung, beschränkt auf die Anordnung eines Laserscanners 9 zu den Haltelinien 2, gezeigt.
Darüber hinaus entspricht die Anordnung gemäß dem dritten Ausführungsbeispiel einer Anordnung gemäß dem ersten Ausführungsbeispiel.

Das dritte Ausführungsbeispiel ist ebenso wie das zweite Ausführungsbeispiel vorgesehen für eine Verwendung, wenn nicht alle Haltelinien 2 in einer Flucht angeordnet sind.
Im Unterschied zum zweiten Ausführungsbeispiel wird jedoch nur ein Laserscanner 9 angeordnet, der den Laserstrahl in zwei Richtungen scannen kann und damit eine beliebige Scanlinie beschreiben kann, wie z. B. eine Scanlinie 11c, die zwischen zwei benachbarten Haltelinien 2 abgeknickt ist.
Die Haltelinien 2 werden dann nicht exakt in einer senkrechten Ebene zur Fahrbahn abgescannt, sondern der Laserstrahl scannt die Haltelinien 2 in Ebenen ab, die schräg zur Fahrbahn stehen, das heißt die einen geringen Kippwinkel δ mit dem Lot einschließen. Die Fahrzeuge werden dann geringfügig vor bzw. nach deren Haltelinie 2 detektiert, was bei der Feststellung des Verkehrsverstoßes beachtet werden muss, sofern die Abweichungen nicht vernachlässigbar sind.

Dadurch dass der Laserscanner 9 senkrecht bzw. nahezu senkrecht auf der Fahrbahn und damit auf der horizontal ausgerichteten Radarstrahlungsachse 4 steht und von oben auf die Szenerie blickt, kann jede Überfahrt eines Fahrzeuges innerhalb einer bestimmten Schaltphase der Ampel, z. B. nur der Rotphase, detektiert werden und somit jeder Rotlichtverstoß erfasst und geahndet werden.
Die Messwerte des Laserscanners 9 werden aber nur in den Fällen dazu genutzt, ein Aktivierungssignal zu erzeugen, welches eine mit einer Verkehrsampel 10 gekoppelte Kamera 8 auslöst, damit sichergestellt ist, dass eine Aufnahme erstellt wird, wenn aus den Radarsignalen keine Wertetripel aus Geschwindigkeit, Entfernung und Winkel abgeleitet werden können, die eine Überfahrt der Haltelinie 2 ermitteln bzw. prognostizieren kann. Erst durch die vorrangige Bewertung der Radarsignale ist es möglich, neben der Rotlichtüberwachung auch noch die ermittelte Geschwindigkeit mit einer dem Fahrstreifen zugeordneten Grenzgeschwindigkeit zu vergleichen, um gegebenenfalls auch einen Geschwindigkeitsverstoß ahnden zu können.
Die Radarstrahlung könnte auch von einem Radargerät 3, welches oberhalb der Fahrbahn, z. B. an einer Brücke montiert ist, in Fahrbahnrichtung vertikal um einen spitzen Winkel auf die Fahrbahn gerichtet werden, was jedoch praktisch aufgrund der Mehranforderungen zur Montage des Radargerätes 3 eher weniger gefragt sein wird.

### Aufstellung der verwendeten Bezugszeichen

- 1: Ampelbereich
- 2: Haltelinie
- 3: Radargerät
- 4: Radarstrahlungsachse
- 5: Fahrbahnrand
- 6: Rechen- und Speichereinheit
- 7: Steuereinheit
- 8: Kamera
- 9: Laserscanner
- 10: Verkehrsampel
- 11: Scanlinie

- α: Aufstellwinkel
- β: Öffnungswinkel
- γ: Auslenkwinkel
- δ: Kippwinkel

## Patentansprüche

1. Verfahren zur Erfassung von Verkehrsverstößen auf einer Fahrbahn mit mehreren Fahrstreifen innerhalb eines Ampelbereiches (1), der durch Haltelinien (2), die jeweils einem Fahrstreifen zugeordnet sind, begrenzt ist, wobei wenigstens eine Verkehrsampel (10) auf die einzelnen Haltelinien (2) bezogene Schaltphasen anzeigt,
bei dem eine von einem am Fahrbahnrand (5) aufgestellten Radargerät (3) ausgehende, eine Radarkeule bildende Radarstrahlung mit einem Öffnungswinkel (ß) größer 20°, unter einem Aufstellwinkel (α) der Radarstrahlungsachse (4) zum Fahrbahnrand (5) von kleiner 45° horizontal über die Fahrbahn gerichtet wird,
die Radarstrahlung an Fahrzeugen reflektiert wird, welche die Radarkeule durchfahren und aus der reflektierten Radarstrahlung fahrzeugbezogen erste Messwerte abgeleitet werden,
unter Einbeziehung eines Verstoßkriteriums aus den ersten Messwerten Daten gebildet werden, die das betreffende Fahrzeug in einer Gruppe von Fahrzeugen innerhalb einer Abbildung über seine Position identifizieren und den Verkehrsverstoß gegebenenfalls beweisen,
die Daten bei Vorliegen eines Verkehrsverstoßes gespeichert werden und eine Kamera (8) ausgelöst wird, um wenigstens eine Abbildung von dem betreffenden Fahrzeug zu erstellen, **dadurch gekennzeichnet,**
**dass** jede Haltelinie (2) durch einen von einem oberhalb der Fahrbahn angeordneten Laserscanner (9) kommenden Laserstrahl abgescannt wird, wenn die der Haltelinie (2) jeweils zugeordnete Schaltphase eine Rotlichtphase ist, der Laserstrahl an Fahrzeugen reflektiert wird, welche die betreffende Haltelinie (2) überfahren und aus dem reflektierten Laserstrahl fahrzeugbezogen zweite Messwerte abgeleitet werden,
**dass** ausgehend von den zweiten Messwerten nach korrelierenden ersten Messwerten gesucht wird, die von demselben Fahrzeug verursacht wurden, und wenn keine korrelierenden ersten Messwerte gefunden werden, die zweiten Messwerte gespeichert werden, eine Kamera (8) ausgelöst wird, um wenigstens eine Abbildung von dem betreffenden Fahrzeug zu erstellen und aus den zweiten Messwerten Daten gebildet werden, die das betreffende Fahrzeug in einer Gruppe von Fahrzeugen innerhalb der Abbildung über seine Position identifizieren und den Verkehrsverstoß beweisen.

2. Verfahren nach Anspruch 1, **dadurch gekennzeichnet,**
**dass** die ersten Messwerte Entfernungswerte, Winkelwerte und Geschwindigkeitswerte sind, die jeweils einem Auftreffpunkt an einem Fahrzeug zugeordnet werden, und aus den ersten Messwerten Daten abgeleitet werden, die einen Rotlichtverstoß beweisen.

3. Verfahren nach Anspruch 1 oder 2, **dadurch gekennzeichnet,**
**dass** die ersten Messwerte Entfernungswerte, Winkelwerte und Geschwindigkeitswerte sind, die jeweils einem Auftreffpunkt an einem Fahrzeug zugeordnet werden, und aus den ersten Messwerten Daten abgeleitet werden, die einen Geschwindigkeitsverstoß beweisen.

4. Verfahren nach Anspruch 1, **dadurch gekennzeichnet,**
**dass** die zweiten Messwerte Entfernungswerte und Winkelwerte sind und aus den zweiten Messwerten Daten abgeleitet werden, um einen Rotlichtverstoß zu beweisen.

5. Verfahren nach Anspruch 1, **dadurch gekennzeichnet,**
**dass** derselbe Laserstrahl in einer Ebene senkrecht zur Fahrbahn alle Haltelinien (2) abscannt, die in einer Flucht senkrecht zum Fahrbahnrand (5) nebeneinander angeordnet sind.

6. Verfahren nach Anspruch 1, **dadurch gekennzeichnet,**
**dass** jeweils ein Laserstrahl in einer Ebene senkrecht zur Fahrbahn, bei der die Haltelinien (2) zueinander versetzt senkrecht zum Fahrbahnrand (5) nebeneinander angeordnet sind, jeweils eine Haltelinie (2) abscannt.

7. Anordnung zur Durchführung eines Verfahrens nach Anspruch 1, mit dem Verkehrsverstöße auf einer Fahrbahn mit mehreren Fahrstreifen innerhalb eines Ampelbereiches (1), der durch Haltelinien (2) begrenzt ist, die jeweils einem Fahrstreifen zugeordnet sind, festgestellt werden können, wobei wenigstens eine Verkehrsampel (10) vorhanden ist, die auf die einzelnen Haltelinien (2) bezogene Schaltphasen anzeigt,
mit einem Radargerät (3), das am Fahrbahnrand (5) mit einem Aufstellwinkel (α) der Radarstrahlungsachse (4) zum Fahrbahnrand (5) von kleiner 45° so aufgestellt ist, dass es eine eine Radarkeule bildende Radarstrahlung mit einem Öffnungswinkel (β) größer 20° horizontal über die Fahrbahn richten kann, sodass die Radarstrahlung von Fahrzeugen reflektiert wird, die die Radarkeule durchfahren,
einer mit dem Radargerät (3) und der Verkehrsampel (10) verbundenen Rechen- und Speichereinheit (6), die so ausgelegt ist, dass sie aus vom Radargerät (3) durch Reflexion an einem Fahrzeug erhaltenen ersten Messwerten Daten bilden kann, die das betreffende Fahrzeug in einer Gruppe von Fahrzeugen innerhalb einer Abbildung über seine Position identifizieren und einen Verkehrsverstoß beweisen können,
einer mit der Rechen- und Speichereinheit (6) verbundenen Steuereinheit (7) sowie wenigstens einer mit dieser verbundenen, auf den Ampelbereich (1) gerichteten Kamera (8), die von der Steuereinheit (7) ein Signal erhalten und ausgelöst werden kann, um wenigstens eine Abbildung zu erstellen, wenn die Rechen- und Speichereinheit (6) Daten gebildet hat, die einen Verkehrsverstoß beweisen, **dadurch gekennzeichnet,**
**dass** wenigstens ein Laserscanner (9) oberhalb der Fahrbahn so angeordnet ist, dass er die Haltelinien (2) abscannen kann und der Laserscanner (9) mit der Verkehrsampel (10) in Verbindung steht, wodurch er in Anhängigkeit vom Beginn der Rotlichtphase angesteuert werden kann und mit der Rechen- und Speichereinheit (6) verbunden ist, die so ausgelegt ist, dass sie aus von an einem Fahrzeug reflektierten Laserstrahl abgeleiteten zweiten Messwerten Daten bilden kann, die das betreffende Fahrzeug in einer Gruppe von Fahrzeugen innerhalb einer Abbildung über seine Position identifizieren und einen Verkehrsverstoß beweisen können und die Rechen- und Speichereinheit (6) dazu ausgelegt ist, die ersten und zweiten Messwerte auf Korrelation zu überprüfen und die zweiten Messwerte abzuspeichern, wenn zu diesen keine korrelierenden ersten Messwerte gefunden wurden.

8. Anordnung nach Anspruch 7, zur Verwendung für eine Fahrbahn, bei der die Haltelinien (2) in einer Flucht senkrecht zum Fahrbahnrand (5) nebeneinander verlaufen, **dadurch gekennzeichnet,**
**dass** ein Laserscanner (9) so oberhalb der Fahrbahn angeordnet ist, dass er die Haltelinien (2) in einer zur Fahrbahn senkrechten Ebene abscannen kann.

9. Anordnung nach Anspruch 7, zur Verwendung für eine Fahrbahn, bei der wenigstens eine Haltelinie (2) versetzt zu den anderen, in einer Flucht senkrecht zum Fahrbahnrand (5) nebeneinander angeordneten Haltelinien (2) verläuft, **dadurch gekennzeichnet,**
**dass** mehrere Laserscanner (9) vorhanden sind, die so oberhalb der Fahrbahn angeordnet sind, dass jede Haltelinie (2) in einer zur Fahrbahn senkrechten Ebene abgescannt werden kann.

10. Anordnung nach Anspruch 8 oder 9, **dadurch gekennzeichnet,**
**dass** auch die Verkehrsampel (10) oberhalb der Fahrbahn angeordnet ist, wodurch der Laserscanner (9) und die Verkehrsampel (10) an einem gemeinsamen Träger befestigt sind.

11. Verwendung einer Anordnung nach einem der Ansprüche, 7-10 um Rotlichtverstöße und/oder Geschwindigkeitsverstöße zu erfassen.

## Claims

1. Method for detecting traffic violations on a road with multiple lanes within a traffic light zone (1) which is delimited by stop lines (2), each of which is assigned to a lane, wherein at least one traffic light (10) indicates switching phases related to the individual stop lines (2),
in which a radar beam with an aperture angle (ß) of greater than 20°, said radar beam forming a radar lobe and being emitted from a radar unit (3) that is mounted at the edge of the road (5), is directed horizontally across the road at a mounting angle (α) of the radar beam axis (4) to the edge of the road (5) of less than 45°,
the radar beam is reflected by vehicles driving through the radar lobe and first vehicle-related measuring values are derived from the reflected radar beam,
under consideration of a violation criterion data is formed from the first measuring values, which data identifies the respective vehicle in a group of vehicles within an image via its position and proves the traffic violation if necessary,
the data is recorded in the instance of a traffic violation and a camera (8) is triggered so as to generate at least one image of the respective vehicle, **characterised in that** each stop line (2) is scanned by a laser beam that is emitted from a laser scanner (9) arranged above the road in the instance where the switching phase assigned to the respective stop line (2) is a red light phase, the laser beam is reflected by vehicles that cross the corresponding stop line (2), and vehicle-related second measuring values are derived from the reflected laser beam,
based on the second measuring values a search is made for correlating first measuring values that have been caused by the same vehicle, and if no correlating first measuring values are found, the second measuring values are recorded, a camera (8) is triggered so as to generate at least one image of the respective vehicle, and data is formed from the second measuring values, which data identifies the respective vehicle in a group of vehicles within the image via its position and proves the traffic violation.

2. Method according to claim 1, **characterised in that** the first measuring values are distance values, angle values and speed values that are each assigned to a point of impact on a vehicle and data is derived from the first measuring values that proves a red light violation.

3. Method according to claim 1 or 2, **characterised in that** the first measuring values are distance values, angle values and speed values that are each assigned to a point of impact on the vehicle and data is derived from the first measuring values that proves a speed violation.

4. Method according to claim 1, **characterised in that** the second measuring values are distance values and angle values and data is derived from the second measuring values so as to prove a red light violation.

5. Method according to claim 1, **characterised in that** the same laser beam scans all stop lines (2) in one plane perpendicular to the road, which stop lines (2) are aligned beside each other and perpendicularly to the edge of the road (5).

6. Method according to claim 1, **characterised in that** one laser beam each scans a stop line (2) each in one plane perpendicular to the road, where the stop lines (2) are arranged offset and adjacent to each other perpendicularly to the edge of the road (5).

7. Arrangement for the implementation of a method according to claim 1, with which traffic violations can be detected on a road with multiple lanes within a traffic light zone (1) that is delimited by stop lines (2), each of which is assigned to a lane, wherein at least one traffic light (10) is present that indicates switching phases related to the individual stop lines (2),
with a radar unit (3) that is mounted at the edge of the road (5) with a mounting angle (α) of the radar beam axis (4) to the edge of the road (5) of less than 45° in such a way that it can direct a radar beam forming a radar lobe with an aperture angle (ß) of greater than 20° horizontally across the road so that the radar beam is reflected by vehicles that drive through the radar lobe,
a computing and recording unit (6) connected to the radar unit (3) and the traffic light (10), said computing and recording unit (6) being designed such that it can form data from first measuring values received from the radar unit (3) through reflection from a vehicle, where said data can identify the respective vehicle in a group of vehicles within an image via its position and can prove a traffic violation,
a control unit (7) connected to the computing and recording unit (6) as well as at least one camera (8) which is connected to said control unit (7) and directed at the traffic light zone (1) and which can receive a signal from the control unit (7) and can be triggered so as to generate at least one image for the event that the computing and recording unit (6) has formed data that proves a traffic violation, **characterised in that**
at least one laser scanner (9) is arranged above the road in such a way that it can scan the stop lines (2) and the laser scanner (9) is connected with the traffic light (10) which makes it possible to trigger it depending on the beginning of the red light phase, and the laser scanner (9) is connected to the computing and recording unit (6) that is designed such that it can form data from second measuring values that have been derived from a laser beam that was reflected from a vehicle, where said data can identify the respective vehicle in a group of vehicles within an image via its position and prove a traffic violation, and the computing and recording unit (6) is designed so as to check the first and second measuring values for correlation and to record the second measuring values if no correlating first measuring values are found.

8. Arrangement according to claim 7, for application on a road where the stop lines (2) are aligned beside each other and extend perpendicular to the edge of the road (5), **characterised in that** a laser scanner (9) is arranged above the road in such a way that it is able to scan the stop lines (2) in a plane perpendicular to the road.

9. Arrangement according to claim 7, for application on a road where at least one stop line (2) extends offset with respect to the other stop lines (2) which are aligned beside each other and perpendicular to the edge of the road (5), **characterised in that** multiple laser scanners (9) are provided that are arranged above the road in such a way that each stop line (2) can be scanned in a plane perpendicular to the road.

10. Arrangement according to claim 8 or 9, **characterised in that** the traffic light (10) is also arranged above the road so that the laser scanner (9) and the traffic light (10) are mounted on a common carrier.

11. Application of an arrangement according to one of claims 7-10 for detecting red light violations and/or speed violations.

## Revendications

1. Procédé de détection d'infractions au code de la route sur une chaussée avec plusieurs voies dans une zone de feux de signalisation (1), qui est délimitée par des lignes d'arrêt (2), chacune étant assignée à une voie, au moins un feu de signalisation (10) indiquant des phases d'allumage liées aux lignes d'arrêt (2) individuelles,
dans lequel un faisceau radar avec un angle d'ouverture (ß) supérieur à 20°, ledit faisceau radar formant un éventail de radar et étant émis d'une unité radar (3) qui est montée au bord de la chaussée (5), est dirigé horizontalement sur la chaussée sous un angle de montage (α) de l'axe de faisceau radar (4) au bord de la chaussée (5) inférieur à 45°,
le faisceau radar est réfléchi par des véhicules qui passent par l'éventail de radar et des premières valeurs de mesure liées au véhicule sont dérivées à partir du faisceau radar réfléchi,
des données sont formées en tenant compte d'un critère d'infraction à partir des premières valeurs de mesure, lesdites données identifiant le véhicule respectif dans un groupe de véhicules dans une image par sa position et prouvant l'infraction au code de la route si nécessaire,
les données sont enregistrées en cas d'une infraction au code de la route et une caméra (8) est déclenchée pour générer au moins une image du véhicule respectif, **caractérisé en ce que**
chaque ligne d'arrêt (2) est balayée par un faisceau laser qui est émis par un scanner laser (9) disposé au-dessus de la chaussée quand la phase d'allumage assignée à la ligne d'arrêt (2) respective est une phase de feu rouge, le faisceau laser est réfléchi par des véhicules qui traversent la ligne d'arrêt (2) respective et des deuxièmes valeurs de mesure liées au véhicule sont dérivées à partir du faisceau radar réfléchi,
à partir des deuxièmes valeurs une recherche de premières valeurs de mesure corrélatives est effectuée qui ont été causées par le même véhicule, et si aucune première valeur de mesure corrélative n'est trouvée, les deuxièmes valeurs de mesure sont enregistrées, une camera (8) est déclenchée pour générer au moins une image du véhicule respectif, et des données sont formées à partir des deuxièmes valeurs de mesure, lesdites données identifiant le véhicule respectif dans un groupe de véhicules dans une image par sa position et prouvant l'infraction au code de la route.

2. Procédé selon la revendication 1, **caractérisé en ce que** les premières valeurs de mesure sont des valeurs de distance, des valeurs d'angle et des valeurs de vitesse qui sont chacune assignées à un point d'impact sur un véhicule et des données sont dérivées à partir des premières valeurs de mesure, lesdites données prouvant une infraction de feu rouge.

3. Procédé selon la revendication 1 ou 2, **caractérisé en ce que** les premières valeurs de mesure sont des valeurs de distance, des valeurs d'angle et des valeurs de vitesse qui sont chacune assignées à un point d'impact sur un véhicule et des données sont dérivées à partir des premières valeurs de mesure, lesdites données prouvant une infraction de vitesse.

4. Procédé selon la revendication 1, **caractérisé en ce que** les deuxièmes valeurs de mesure sont des valeurs de distance et des valeurs d'angle et des données sont dérivées à partir des deuxièmes valeurs de mesure pour prouver une infraction de feu rouge.

5. Procédé selon la revendication 1, **caractérisé en ce que** le même faisceau laser balaye toutes les lignes d'arrêt (2) dans un plan perpendiculaire à la chaussée, lesdites lignes d'arrêt (2) étant alignées les unes à côté des autres et perpendiculairement au bord de la chaussée (5).

6. Procédé selon la revendication 1, **caractérisé en ce qu'**un faisceau laser chacun balaye une ligne d'arrêt (2) chacune dans un plan perpendiculaire à la chaussée, où les lignes d'arrêt (2) sont disposées de manière décalée et adjacente les unes par rapport aux autres perpendiculairement au bord de la chaussée (5).

7. Agencement de mise en oeuvre d'un procédé selon la revendication 1, avec lequel des infractions au code de la route peuvent être détectées sur une chaussée avec plusieurs voies dans une zone de feux de signalisation (1) qui est délimitée par des lignes d'arrêt (2), chacune étant assignée à une voie, au moins un feu de signalisation (10) étant présent qui indique des phases d'allumage liées aux lignes d'arrêt (2) individuelles,
avec une unité radar (3) qui est montée au bord de la chaussée (5) avec un angle de montage (α) de l'axe de faisceau radar (4) au bord de la chaussée (5) inférieur à 45° de telle façon qu'elle peut diriger un faisceau radar formant un éventail de radar avec un angle d'ouverture (ß) supérieur à 20° horizontalement sur la chaussée de telle façon que le faisceau radar est réfléchi par des véhicules qui passent par l'éventail de radar,
une unité de calcul et d'enregistrement (6) liée à l'unité radar (3) et au feu de signalisation (10), l'unité de calcul et d'enregistrement (6) étant conçue de manière à pouvoir former des données à partir de premières valeurs de mesure reçues de l'unité radar (3) par réflexion par un véhicule, lesdites données pouvant identifier le véhicule respectif dans un groupe de véhicules dans une image par sa position et prouver une infraction au code de la route,
une unité de contrôle (7) liée à l'unité de calcul et d'enregistrement (6) et au moins une caméra (8) qui est liée audite unité de contrôle (7) et dirigée sur la zone de feux de signalisation (1) et qui peut recevoir un signal de l'unité de contrôle (7) et peut être déclenchée pour générer au moins une image quand l'unité de calcul et d'enregistrement (6) a formé des données qui prouvent une infraction au code de la route, **caractérisé en ce**
**qu'**au moins un scanner laser (9) est disposé au-dessus de la chaussée de telle façon qu'il peut balayer les lignes d'arrêt (2) et le scanner laser (9) est lié au feu de signalisation (10), lui permettant d'être déclenché en fonction du début de la phase de feu rouge, et est lié à l'unité de calcul et d'enregistrement (6) qui est conçue de manière à pouvoir former des données à partir de deuxièmes valeurs de mesure dérivées à partir d'un faisceau laser réfléchi par un véhicule, lesdites données pouvant identifier le véhicule respectif dans un groupe de véhicules dans une image par sa position et prouver une infraction au code de la route, et l'unité de calcul et d'enregistrement (6) est conçue de manière à vérifier une corrélation entre les premières et deuxièmes valeurs de mesure et à enregistrer les deuxièmes valeurs de mesure si aucune première valeur de mesure corrélative n'est trouvée.

8. Agencement selon la revendication 7, pour l'application sur une chaussée où les lignes d'arrêt (2) sont alignées les unes à côté des autres et s'étendent perpendiculairement au bord de la chaussée (5), **caractérisé en ce qu'**un scanner laser (9) est disposé au-dessus de la chaussée de telle façon qu'il peut balayer les lignes d'arrêt (2) dans un plan perpendiculaire à la chaussée.

9. Agencement selon la revendication 7, pour l'application sur une chaussée où au moins une ligne d'arrêt (2) s'étend de manière décalée par rapport aux autres lignes d'arrêt (2) qui sont alignées les unes à côté des autres et perpendiculairement au bord de la chaussée (5), **caractérisé en ce que** plusieurs scanners laser (9) sont présents qui sont disposés au-dessus de la chaussée de telle façon que chaque ligne d'arrêt (2) peut être balayée dans un plan perpendiculaire à la chaussée.

10. Agencement selon la revendication 8 ou 9, **caractérisé en ce que** le feu de signalisation (10) est aussi disposé au-dessus de la chaussée de façon que le scanner laser (9) et le feu de signalisation (10) sont montés sur un support commun.

11. Application d'un agencement selon une des revendications 7-10 pour détecter des infractions de feu rouge et/ou des infractions de vitesse.
